## Europäisches Patentamt
## European Patent Office
## Office européen des brevets

(11) Publication number: **0 128 708**
A1

# EUROPEAN PATENT APPLICATION

(21) Application number: **84303680.7**

(51) Int. Cl.³: **G 08 B 21/00, G 01 F 23/28**

(22) Date of filing: **01.06.84**

(30) Priority: **07.06.83 GB 8315650**

(43) Date of publication of application: **19.12.84**
**Bulletin 84/51**

(84) Designated Contracting States: **DE FR GB IT**

(71) Applicant: **Scheme Engineering Limited, Unit 5A Moniton Industrial Estate Worting Road, Basingstoke Hampshire RG22 6NQ (GB)**

(72) Inventor: **Curthoys, John Robert Charles, 11 Little Basing Old Basing, Nr. Basingstoke Hampshire (GB)**
Inventor: **Bonner, Timothy, 94 Sheppard Road, Basingstoke Hampshire (GB)**

(74) Representative: **Singleton, Jeffrey et al, Eric Potter & Clarkson 5 Market Way Broad Street, Reading Berkshire, RG1 2BN (GB)**

(54) **Liquid presence sensors.**

(57) A liquid presence sensor comprises a body (1) having a bore (2) extending therethrough, ultrasonic transducer means (4) mounted on the body and arranged, in use, to sense the presence of liquid in the bore, and mounting means (14, 15) for mounting the sensor in line with a conduit (12, 13) for containing liquid the presence of which is to be sensed, whereby the bore in the sensor body is substantially coaxial with the conduit.

LIQUID PRESENCE SENSORS                    0128708

This invention relates to liquid presence sensors and more particularly to such sensors which are energised ultrasonically.

Ultrasonic liquid flow sensors are known which are arranged to be releasably clamped around the conduit through which the liquid flow to be monitored takes place. This type of equipment can be difficult to handle in terms of assembling and dismantling it in a given environment and more importantly, it is not easy always to achieve a satisfactory ultrasonic connection between the sensor and the conduit to which it is to be applied.

According to the present invention a liquid presence sensor comprises a body having a bore extending therethrough, ultrasonic transducer means mounted on the body and arranged, in use, to sense the presence of liquid in the bore, and mounting means for mounting the sensor in line with a conduit for containing liquid the presence of which is to be sensed, whereby the bore in the sensor body is substantially coaxial with the conduit.

The transducer means may comprise a pair of ultrasonic transducers, preferably of the piezo-electric type, mounted generally on opposed sides of the bore with one transducer arranged as a transmitter and the other as a receiver. Each transducer may be mounted in a recess in the sensor body close to the bore and the recess is preferably filled with a damping medium. An ultrasonic coupling medium may be applied to the interface between each transducer and the body of the sensor.

The mounting means may be of various types but conveniently, the body of the sensor is formed with either a threaded boss or threaded counterbore at each end of the bore, whereby the conduit can be screwed onto the ends of the sensor either directly or via couplings.

The invention has numerous applications: for example, it can be used to monitor the presence of liquid at the intake of a pump and render the pump inoperative when liquid is absent so as to prevent dry running of the pump which can be deleterious, or used to monitor the supply of a liquid to a mixing or other process and warn when the supply of that liquid ceases. A plurality of liquid presence sensors can be employed in series to monitor the filling of a vessel with liquid, the sensors being rendered operative successively as the liquid level rises. Also the invention can be used to monitor an overflow line fitted to a vessel and warn when the overflow is operative.

The invention can also be used to advantage to indicate when flow of liquid is taking place or when flow has ceased and the phrase "liquid presence sensor" should be construed accordingly. In this application only the presence or absence of liquid flow (as opposed to flow rate) is indicated which can be accomplished by employing the liquid presence sensing technique of the present invention. In one such application, a restrictor is placed in a generally vertical pipeline through which liquid flow is to be monitored, and a bypass pipeline provided around the restrictor, with the ultrasonic transducer means disposed between the restrictor and the upstream end of the bypass. With this arrangement, when maximum flow is taking place through the main pipeline, the restrictor impedes that flow to an extent that full flow will also take place through the bypass pipeline and the transducer means sense the presence of liquid. However, if flow decreases, a point will be reached when flow through the bypass ceases and the level of liquid in the main pipeline falls below the transducer means, whereupon the cessation or significant decrease in flow will be detected and indicated.

In an alternative arrangement, means are provided for introducing turbulence into the flow of liquid, with the transducer means disposed so as to "look" at the turbulence, the presence of which indicates flow and the absence of which indicates no flow. It will be appreciated that when no flow is taking place, the pipeline in question may be either full or empty of liquid and the transducer means can be arranged to indicate this as well as the presence or absence of flow. The turbulence need only be random and may be produced, for example, by introducing a discontinuity in the bore of the pipeline upstream of the transducer means.

Thus the present invention provides an in-line liquid presence sensor which has none of the problems associated with the known sensors which are clamped around a conduit. Since the ultrasonic coupling between the transducer means and the body of the sensor, which in use forms part of the conduit, is set on manufacture, then there is no problem in this connection even if it is necessary to replace a sensor. Furthermore, the transducer means are mounted closer to the liquid to be sensed which reduces the power necessary to drive the transducer means.

A liquid presence sensor in accordance with the present invention, and applications thereof, will now be described in greater detail by way of example, with reference to the accompanying drawings, in which:-

Figure 1 is a side view of one sensor,

Figure 2 is longitudinal cross-section of the sensor of Figure 1,

Figure 3 is an end view of the sensor of Figure 1,

Figure 4 is a block diagram of a monitoring circuit associated with the sensor of Figure 1,

Figures 5 to 8 illustrate schematically various applications of the sensor of Figure 1,

Figure 9 is a cross section of a further arrangement embodying the sensor of Figure 1,

Figure 10 is a cross section of a still further arrangement embodying the sensor of Figure 1, and

Figure 11 is a block diagram of a monitoring circuit associated with the arrangement of Figure 10.

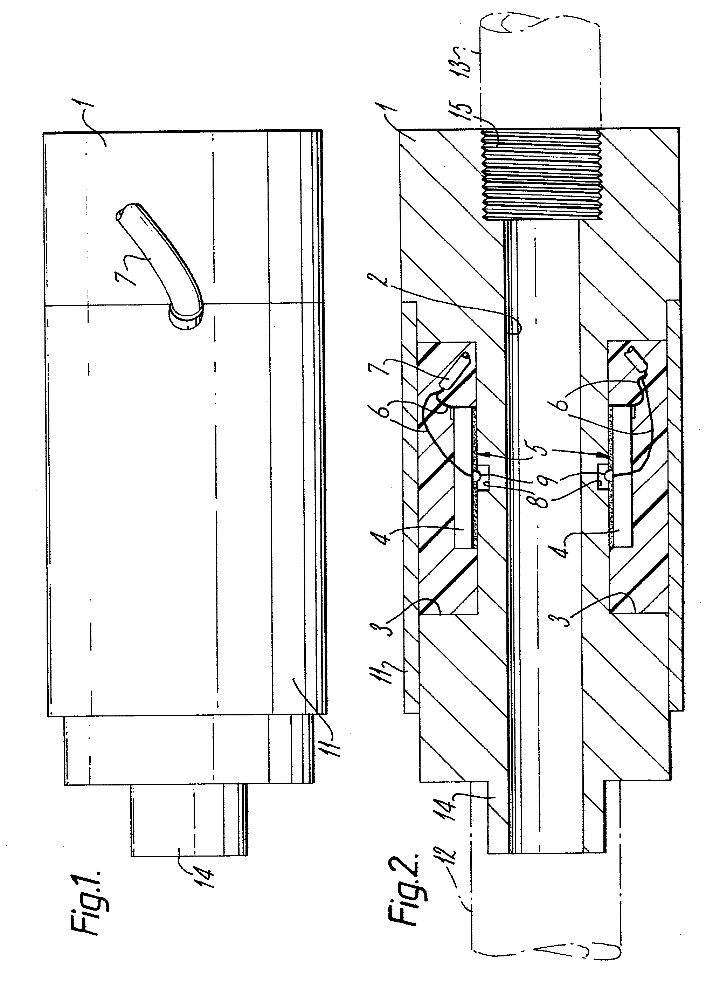

Referring to Figures 1 to 3, the sensor

4   0128708

comprises a cylindrical body 1 of a metal or synthetic plastics material and formed with an axial through bore 2 and with two diametrically opposed flats forming recesses 3. In each recess 3 there is mounted a piezo-electric transducer 4 which is attached to the base of the recess by an ultrasonic coupling medium 5 which may be a hard or soft adhesive or a grease such as silicone grease. Electrical leads 6 are attached to opposed sides of each transducer 4 and are taken from the body 1 through a sleeve 7. The base of each flat or recess 3 is formed with a further but smaller flat or recess 8 to accommodate the solder joint 9 attaching one lead 6 to the undersurface of the associated transducer 4. When the transducers 4 have been secured or located in position, the recesses 4 are filled with a damping medium which may be of any suitable form although a tungsten loaded epoxy resin has been found particularly effective. The recesses 3 are formed in a portion of the body 1 having a reduced diameter and a cable clamp and cover in the form of a sleeve 11 is provided over the recesses, the sleeve and remainder of the body having the same outer diameter.

The sensor is adapted for mounting in line with a conduit 12 or 13 and to this end, mounting means are provided. Figure 2 shows alternative mounting means at respective ends of the body 1 for convenience of illustrations and normally, the same type of mounting means would be employed at each end. The left-hand end of Figure 2 shows the mounting means in the form of a boss 14 formed integrally of the body and extending axially thereof. The boss 14 may be threaded or plain, whereby the conduit 14 is either screwed on to the boss or pushed thereover and secured by a circlip or other means. The alternative mounting means shown at the right-hand side of Figure 2 comprises a threaded counterbore 15 in the end of the body 1 which receives the end of the conduit 13, the latter being shown only diagrammatically. Alternatively, the counterbore 15 may be plain and the conduit 13 a push fit therein if the circumstances permit such a connection.

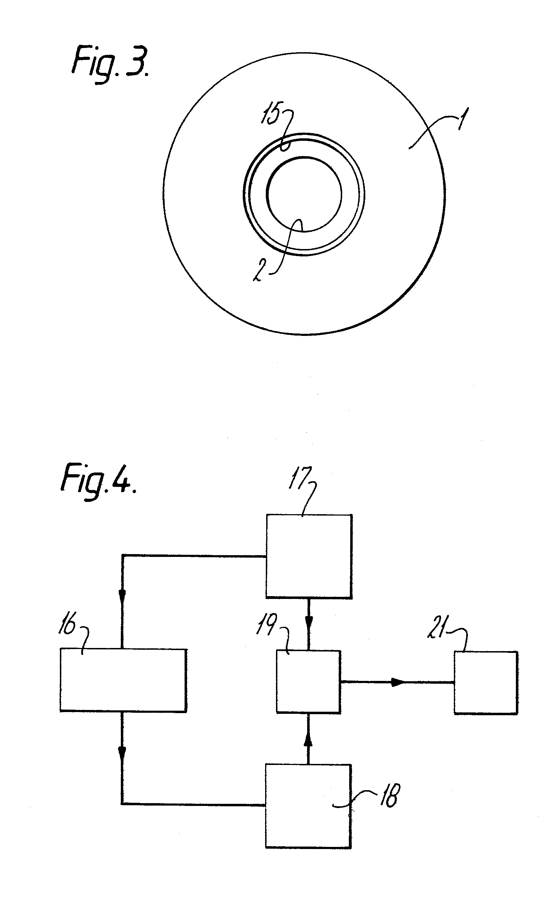

Referring now to Figure 4, this shows an electrical circuit associated with the sensor which is referenced 16. To one of the transducers 4 of the sensor 16 there is connected a transmitter 17, and to the other transducer there is connected a receiver 18. Between the transmitter 17 and receiver 18 there is connected a signal level monitoring device 19 (typically including a peak signal follower and a level detector) to which is connected an audio and/or visual alarm or display 21.

In use, the transmitter continuously drives the associated transducer 4, whereby a continuous wave of ultrasound issues from that transducer across the bore 2 of the sensor for reception by the other transducer. In response to the reception of the wave of ultrasound, the other transducer 4 produces an electrical output signal which is fed to the receiver 18. When the bore 2 of the sensor is empty of liquid, the amount of ultra sound energy transmitted between the two transducers is at a certain level, resulting in a particular output signal from the receiver transducer, the level of which signal is monitored by the signal level monitor 19. When liquid is present in the bore 2, the amount of ultra sound energy transmitted between the transmitter and receiver transducers 4 increases, whereby the level of the output signal of the receiver transducer increases and is sensed by the signal level monitor 19. Upon such sensing, the alarm or display 21 is activated in a manner which is dependent upon the application of the sensor.

The sensor may be used merely to detect the presence of liquid in the bore 2, and more particularly between the transducers 4, and hence the presence of liquid in the conduit in which the sensor is connected. Alternatively, the sensor may be employed as a level switch or a level alarm or an overflow alarm. Furthermore, when liquid is actually flowing through the sensor and conduit in which it is fitted, the sensor can

6  0128708

be arranged to monitor the presence of bubbles in the liquid of a size substantially equal to the diameter of the bore 2. In the presence of such a bubble between the transducers 4, the ultrasonic transmission across the bore 2 will decrease, whereby the output signal of the receiver transducer will decrease which will be sensed by the signal level monitor 19. The latter will then trigger the alarm 21. This application of the invention is particularly advantageous in the medical field, for example when the sensor is used in a pipeline supplying blood to a patient when the presence of bubbles can be dangerous.

The sensor of the present invention can be used with a conduit of any cross-sectional area, consistent with it being practical to transmit ultrasonic waves thereacross. Furthermore the arrangement of the transducers 4 of the illustrated embodiment may be varied in that they do not need to be diametrically opposed although this is the optimum transmission arrangement. Also, more than two transducers may be employed and the type of mounting means for the sensor with respect to the conduit can be other than those illustrated.

When the body of the sensor is metallic, there is often a tendency for the ultrasonic signal to be conducted around the periphery thereof rather than across the body. In such an instance, the body may be formed with a series of cuts or slots which are filled with a damping medium. In this way, the ultrasonic signal is restrained from travelling around the periphery of the sensor body so as to maximise the transmission of that signal across the sensor body.

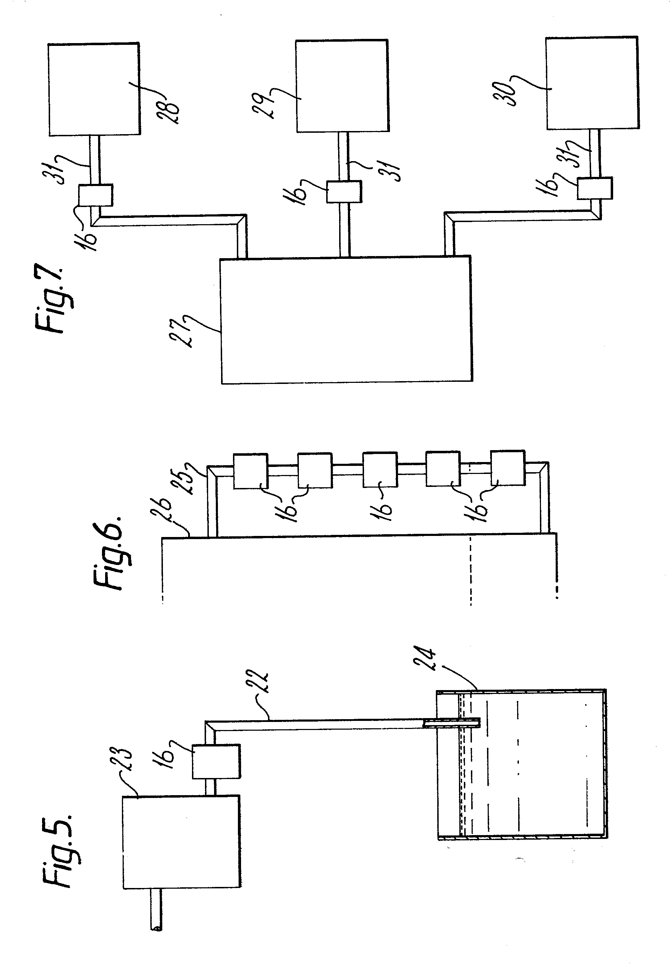

Turning now to Figures 5 to 8, these illustrate diagrammatically various applications of the sensor of Figures 1 to 3, some of which have already been referred to. Figure 5 shows the sensor 16 mounted in the intake line 22 of a pump 23 which operates to pump liquid from a supply which is illustrated as a vessel 24. Provided the intake line 22 is full of liquid, there will be a maximum output from the sensor 16, which output will drop if the supply dries up. Any such drop in the sensor output may be used to initiate an audio and/or visual alarm as already described and in addition, the pump can be rendered inoperative so as to avoid the possibility of damage to the pump occurring as a result of it running dry.

Figure 6 illustrates the application of the sensor to a liquid level indicator, a plurality of sensors 16 being mounted in series in a bypass line 25 of a vessel 26 the level of liquid in which is to be monitored. As the level of liquid rises in the vessel 26, the lowest sensor 16 will first sense the presence of liquid in the bypass 25 and provide the appropriate warning or indication. As the level continues to rise, the next lowest sensor 16 will sense the presence of liquid in the bypass 25, and so on.

In Figure 6 there is illustrated a mixing process 27 which takes in three different liquids from respective vessels 28, 29, 30. In each of the connections 31 from the vessels 28, 29, 30 to the process 27 there is disposed a sensor 16 which is arranged to initiate an alarm as before should the supply of liquid from the associated vessel dry up.

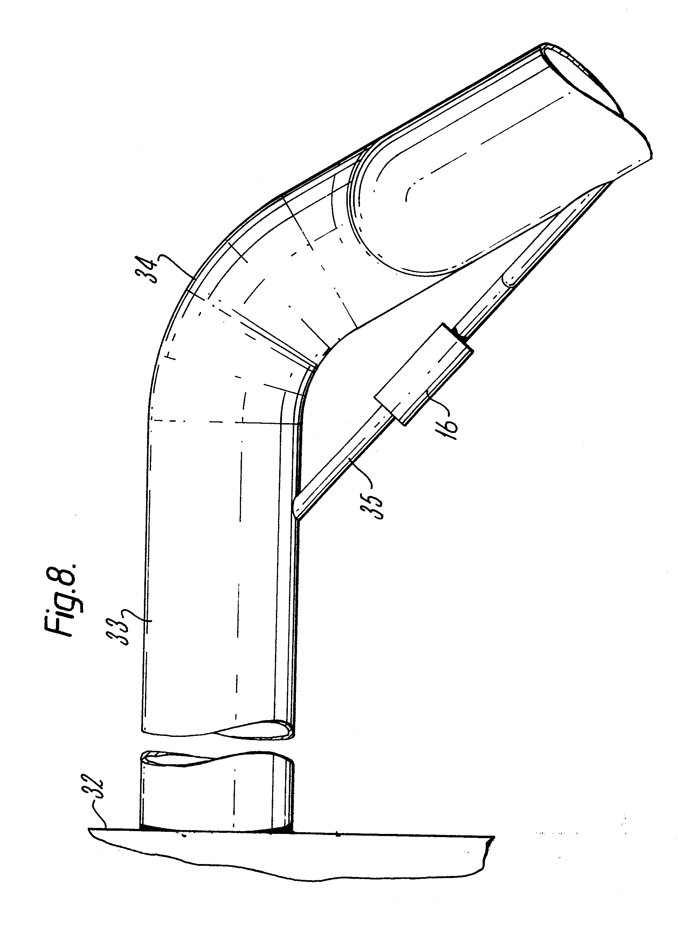

Figure 8 illustrates the use of the sensor to monitor the overflow condition of a vessel 32 fitted with an overflow pipe 33 having a downwardly inclined elbow bend 34. Across the elbow 34 there is provided a bypass pipe 35 fitted with a sensor 16 and being welded or otherwise connected to the overflow pipe 33 at respective ends. When the liquid in the vessel 32 rises to a level such that it begins to flow through the overflow pipe, then it will also flow through the bypass 35 and when the flow is sufficient to fill the bypass, the sensor 16 will sense the presence of liquid and initiate the alarm.

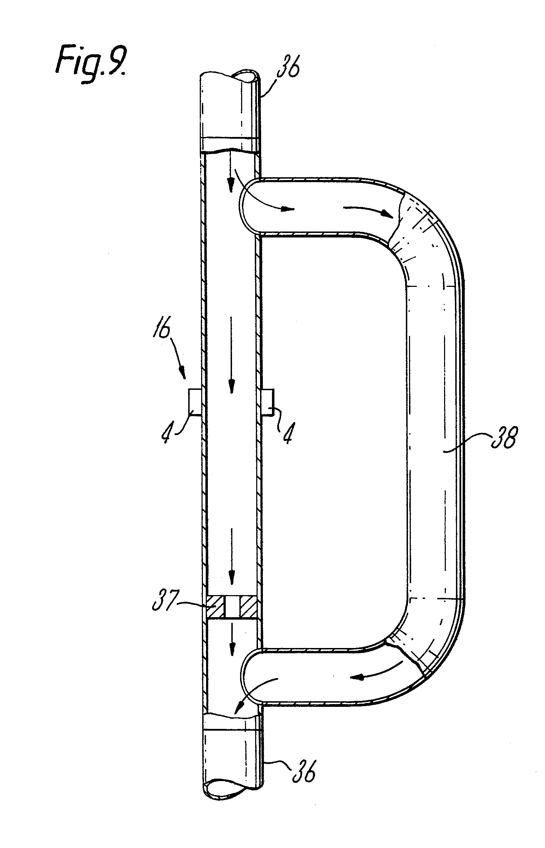

Turning now to Figure 9, this illustrates the use of the sensor in the role of a flow indicator or switch, i.e. the sensor is arranged to indicate the presence or absence of flow of a liquid but not rate of flow of the liquid. The sensor 16 is mounted in line with a main pipeline or conduit 36 as before, although in this application, the pipeline has to be generally vertical. The sensor 16 (which is only indicated generally by showing the transducers 4) is provided with a restrictor 37 spaced below the transducers 4 of the sensor 16, and a bypass pipe 38 is disposed around the sensor and restrictor. If the main pipeline 36 is empty and full liquid flow then takes place therein, the restrictor 37 impedes the flow of liquid so that a column of liquid builds up thereabove whereupon flow is diverted around the bypass 38. With the portion of the pipeline 36 between the bypass 38 full of the liquid, the sensor will indicate this presence. Should flow through the pipeline 36 reduce to an extent such that the restrictor 37 can accommodate the same, then no further flow through the bypass 38 takes place and the level of liquid in the main pipeline may fall below the position of the sensor transducer 4 whereupon an alarm will be initiated. It will be appreciated that the relative diameters of the pipeline 36 and restrictor 37, and the distance between the transducer 4 of the sensor 16 will determine the flow condition at which the alarm is initiated. The sensor 16 and bypass 38 are preferably supplied as an integral unit, as shown, which is thus insertable into the main pipeline 36.

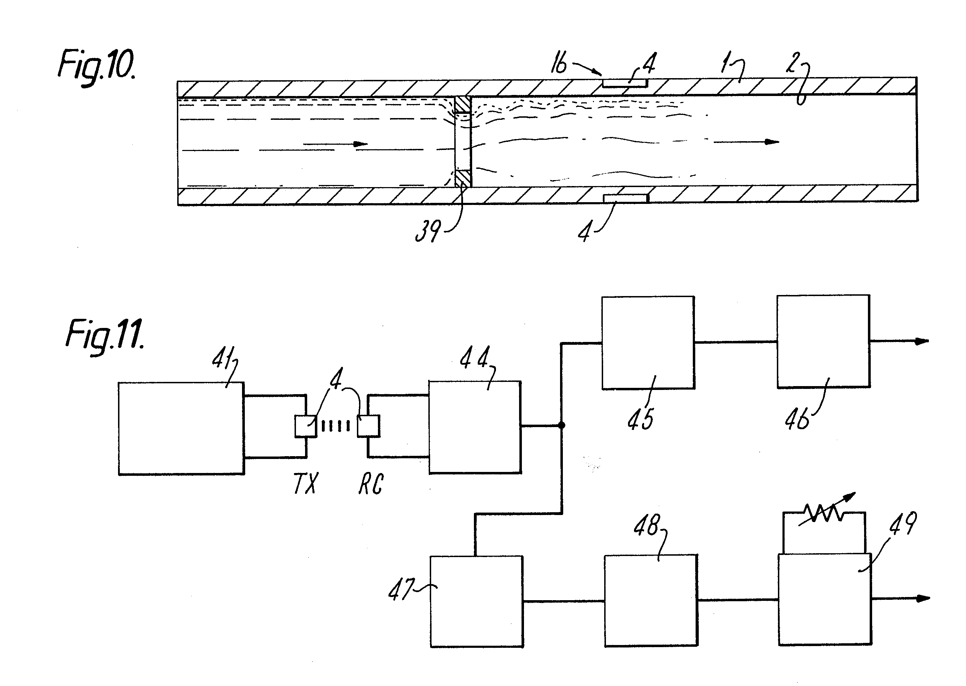

Another flow indicator type of application of the sensor according to the present invention is shown in Figures 10 and 11. In this arrangement, means are provided for creating turbulence in the liquid in the vicinity of the sensor transducer 4, these means being shown in Figure 10 (which is merely diagrammatic) as an annular ring 39 inserted in the bore 2 of the sensor so as in effect to provide a discontinuity in that bore to create random turbulence in the liquid flowing therethrough. Alternatively, a step or annular groove can be machined in the bore.

The sensor 16 can be employed in two roles in this arrangement namely, as a liquid presence sensor in the manner already discussed, and as a flow indicator. It will be appreciated that when the sensor bore 2 is full of liquid, then the sensor will indicate this condition irrespective of whether that liquid is flowing or stationary. However, when the liquid is flowing, the ring 39 or other discontinuity causes turbulence in the liquid in the vicinity of the sensor transducer 4, which turbulence modulates the ultrasonic signal passing between the transducers. This modulation is detected and used to provide an output signal indicating that flow is taking place, which signal may also be used to switch equipment, for example. Alternatively, the electrical circuit associated with the sensor can be arranged to provide an output signal when liquid flow has ceased or dropped to a predetermined level, again the output signal being utilised as desired.

The control circuitry is shown in greater detail in Figure 11 with the upper half of the figure equating generally with the circuit of Figure 4 and producing an output signal indicative of the presence of liquid in the sensor bore 2. More specifically, an oscillator 41 drives one of the transducers 4 and the other transducer produces an output signal in response to that transmission which is applied to an RF amplifier 44 and passed to a peak signal follower 45 the output of which is applied to a level detector 46 which produces an output signal when the signal level is above a predetermined threshold.

Looking now at the lower half of Figure 11, this shows the circuitry associated with the flow detection of the arrangement of Figure 10. It will be remembered that when the liquid is actually flowing through the sensor, the ultrasonic signal is modulated by the random turbulence produced by the discontinuity 39 so the amplified output from the receiver 43 is passed to a demodulator 47 the DC output signal of which is amplified at 48 then applied to a level detector 49 which is adjustable so as to set the flow level at which an output signal is produced by the detector to indicate flow of liquid through the sensor.

The control circuitry employed with any sensor arrangement can be located remote from the sensor or sensors or be mounted on the sensor body to provide a very compact, total unit.

### CLAIMS

1.    A liquid presence sensor characterised in that it comprises a body (1) having a bore (2) extending therethrough, ultrasonic transducer means (4) mounted on the body and arranged, in use, to sense the presence of liquid in the bore, and mounting means (14, 15) for mounting the sensor in line with a conduit for containing liquid the presence of which is to be sensed, whereby the bore in the sensor body is substantially coaxial with the conduit.

2.    A sensor according to claim 1, characterised in that the transducer means comprise a pair of piezo-electric ultrasonic transducers (4) mounted generally on opposed sides of the bore with one transducer arranged as a transmitter and the other as a receiver.

3.    A sensor according to claim 1 or 2, characterised in that each transducer (4) is mounted in a recess (3) in the body (1) of the sensor close to the bore (2).

4.    A sensor according to claim 3, characterised in that each recess (3) is filled with a damping medium to damp ultrasonic transmission.

5.    A sensor according to claim 2 or 3, characterised in that an ultrasonic coupling medium, (5) is applied to the interface between each transducer (4) and the body (1) of the sensor.

6.    A sensor according to claim 2, and any claim appended thereto, characterised in that peak signal follower means (45) are connected to the receiving transducer and a level detector (46) is connected to the output of the peak signal follower, the level detector producing an output signal when the follower output signal breaches a predetermined threshold.

7. A sensor according to any of the preceding claims and arranged to sense the presence of actual flow of a liquid therethrough, characterised in that restrictor means (37) are provided downstream of the transducer means (4) for restricting fluid flow, and in that a bypass (38) is provided around both the transducer means and the restrictor means, in use liquid flow around the bypass taking place when substantially maximum flow through the sensor is taking place, whereby the presence of liquid in the sensor bore (2) is sensed, with the absence of liquid being sensed when the flow reduces to an extent that flow through the bypass no longer takes place and the level of liquid in the sensor bore falls below the level of the transducer means.

8. A sensor according to any of claims 1 to 6 and arranged to sense the presence of actual flow of a liquid therethrough, characterised in that means (39) are provided for producing, in use, turbulence in the liquid in the vicinity of the transducer means (4) which turbulence modulates the ultrasonic signal passing therethrough, and in that means (47, 48, 49) are provided for sensing the modulation and producing an output signal when the modulation breaches a predetermined threshold.

9. A sensor according to claim 8, characterised in that the means for sensing the modulation and producing an output signal responsive thereto comprise a demodulator (47) and a level detector (49) connected to receive the output signal from the demodulator, the level detector being adjustable.

10. A sensor according to any of the preceding claims, characterised in that alarm means (21) are provided which are actuated when liquid presence or absence and/or flow is sensed.

Fig.1.

Fig.2.

0128708

*Fig. 3.*

*Fig. 4.*

Fig.5.

Fig.6.

Fig.7.

23

16

22

24

26

25

16

16

16

16

27

16

31

28

16

29

31

16

30

31

Fig.8.

4/6

0128708

Fig.9.

Fig.10.

Fig.11.

0128708

0128708

European Patent Office

**EUROPEAN SEARCH REPORT**

## DOCUMENTS CONSIDERED TO BE RELEVANT

EP 84303680.7

| Category | Citation of document with indication. where appropriate, of relevant passages | Relevant to claim | CLASSIFICATION OF THE APPLICATION (Int. Cl. ³) |
|---|---|---|---|
| X | GB - A - 2 101 318 (ITT INDUSTRIES INC.)<br>* Abstract; page 2, lines 6-16; fig. 1,2 * | 1-3 | G 08 B 21/00<br>G 01 F 23/28 |
| A | US - A - 4 316 183 (PALMER et al.)<br>* Column 1, lines 4-59; column 3, line 49 - column 4, line 67; fig. 1-5 * | 1,2,6,10 | |
| A | DE - A1 - 3 033 949 (VDO ADOLF SCHNIDLING)<br>* Claim 1; page 5, line 14 - page 6, line 9; fig. * | 1-3,7,8 | |
| A | DE - A1 - 3 013 482 (KROHNE)<br>* Page 2, line 1 - page 3, line 5; page 5, lines 19-35; fig. * | 1,2,4 | TECHNICAL FIELDS SEARCHED (Int. Cl. ³) |
| A | US - A - 4 063 457 (ZEKULIN et al.)<br>* Column 2, lines 6-64; column 3, lines 10-64; fig. 1-6 * | 1,2,4 | G 08 B<br>G 01 F<br>G 05 D |

The present search report has been drawn up for all claims

| Place of search | Date of completion of the search | Examiner |
|---|---|---|
| VIENNA | 20-09-1984 | HAJOS |